(19) Europäisches Patentamt
European Patent Office
Office européen des brevets

(11) EP 2 239 030 A1

(12) EUROPEAN PATENT APPLICATION

(43) Date of publication:
13.10.2010 Bulletin 2010/41

(51) Int Cl.:
B01D 19/00 (2006.01)          B01D 53/14 (2006.01)
B01D 53/58 (2006.01)          C02F 1/20 (2006.01)

(21) Application number: 09157621.5

(22) Date of filing: 08.04.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicants:
• Sturla, Vittorio
  25025 Manerbio (BS) (IT)
• Testa, Sergio
  24060 Cenate Sopra (BG) (IT)

(72) Inventors:
• Baldi, Marco
  27017 Belgioioso (Pavia) (IT)
• Binaghi, Diego
  27100 Pavia (IT)

(74) Representative: Robba, Pierpaolo
Interpatent S.R.L.
Via Caboto 35
10129 Torino (IT)

(54) **A process for stripping and recovering ammonia from digested wastes and plant for carrying out said process.**

(57)   A process for reducing ammonia from digested wastes (9), in which the stripping of ammonia by counter-current air/liquid extraction inside a stripping column (1) and the subsequent recover of ammonia by counter-current contact of the gas phase (11) exiting said stripping column (1) with a first sulphuric acid solution (10) inside a first absorption column (2) are provided.

Fig. 1

## Description

*Technical Field*

The present invention concerns a process for stripping and recovering ammonia from digested wastes. The invention also extends to the plant used for carrying out said process. The field of the invention is that of the treatment of animal excrements, hereinafter referred to as "slurry", particularly coming from the pigs breedings, directed to reduce the ammonia and generally other nitrates content well below the thresholds imposed by the strictest regulations.

It is known how the excrements coming from animals breedings form a considerable source of dangerous pollutants for the environment, mainly due to their high ammonia content.

*Disclosure of the Invention*

It is, therefore, the main object of the present invention to provide a process, and the relevant plant, suitable for reducing the nitrates content in the digested wastes, downstream their anaerobic digestion plant.

It is a further object of the invention to provide a process and a plant suitable for recovering energy and polluting products, so as to further reduce the emissions to the atmosphere.

It is, finally, a further object of the invention to provide a plant of the aforesaid kind, which has sufficiently reduced sizes so to be able to be installed also within the most modest farms, even though maintaining the efficiency and the effectiveness of a larger size plant. These and other objects are achieved with the process and the plant of claims 1 and 13, respectively. Some preferred embodiments of the invention result from the remaining claims.

The invention offers the advantage of combining the material and energy recover with the nitrates reduction in the digested wastes, thus achieving the double effect of both reducing their ammonia content below the strictest thresholds and further reducing the polluting emissions to the atmosphere.

Moreover, the invention offers the advantage of being feasible also on small-scale, and therefore suitable for serving modest size plants, even though maintaining the efficiency and the effectiveness of a larger size plant.

A further advantage of the process and the plant of the invention resides in the optional use of the recovered energy and chemicals, as well as the employ of the process by-products (such as thermal energy and fertiliser) within the same agricultural supply chain.

*Brief Description of the Drawings*

These and other objects, advantages and features result from the process and the plant of the invention, the plant being illustrated, by way of non limiting example, in the following figures, in which:

- FIG. 1 shows the plant according to a preferred embodiment of the invention;
- FIG. 2 shows a variant of the plant of FIG. 1.

*Description of Preferred Embodiments*

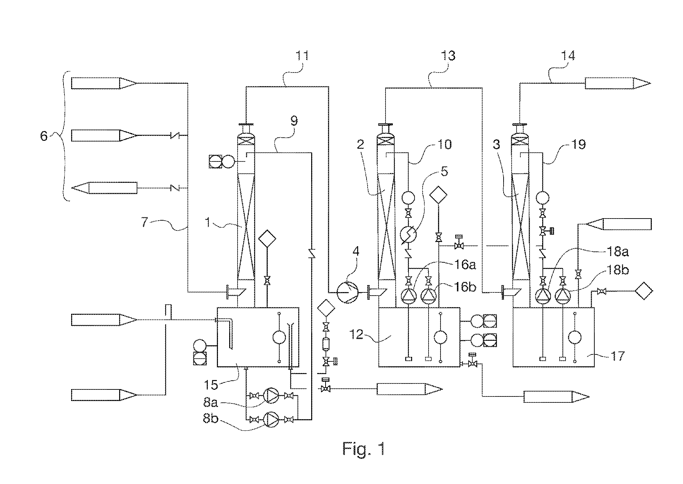

The plant illustrated in FIG. 1, representing a preferred embodiment of the invention, is particularly intended for achieving a reduction by 70-80 % of the ammonia amount present in the excrements (slurry) of animal breedings coming from the relevant anaerobic treatment plant equipped with an electric power generation plant through endothermic engines.

In principle, the process of the invention carries out the aforesaid ammonia reduction by air/liquid extraction inside a counter-current contact tower and subsequent ammonia recover by absorption on sulphuric acid solution inside a scrubber, with ammonium sulphate production.

The plant of the invention essentially comprises three columns: column 1 devoted for stripping ammonia by means of a hot air stream, column 2 for absorbing the ammonia stripped from column 1 and column 3 as ammonia emission safety lock. The mechanical features of the two absorption column 2 and 3 are perfectly the same.

In addition to said columns, the plant of the invention provides a suction fan 4 for the gas phase exiting the stripping column 1, which creates a slight depression inside said stripping column 1, the solutions recirculation pumps from the columns, the apparatus 5 for the heat exchange on the first absorption column 2 as well as the control instrumentation for monitoring the chemical-physical parameters and the reactants storage tanks (not shown). The stripping of ammonia takes place inside column 1, using the cooling air coming from the endothermic engines 6 producing electric power, already existing downstream the excrements anaerobic treatment. The air stream 7, which has an average temperature of 60 °C, is so canalised and conveyed to the stripping column 1, which is fed, through pumps 8a and 8b, with a slurry stream 9 coming from the anaerobic digester (not shown) and containing the ammonia to be stripped.

Inside the stripping column 1, which is provided with a spherical filling body, the intimate contact between the hot air stream 7 and the ammonia contained in the slurry 9 takes place, thus obtaining the desired stripping effect.

In order to manage to achieve the expected result, the contact times between air and slurry are requested to be quite high. To this purpose, a low air velocity and a high hold-up are maintained inside the stripping column 1, so as to have a slurry average residence time of about three hours.

Optionally, the stripping column 1 is equipped with a control pHmeter, which will be able to run a NaOH feeding in case a slurry basification should be needed. According to literature data this basification is not strictly necessary, but the dosage chance is anyway provided in case of need, settled the fact that the slurry is not perfectly the same from one situation to the other. In this case, in fact, the basification operation allows to obtain an identical result, with lower residence times in the column.

Afterwards, air passing through the stripping column 1 reaches the first absorption column, denoted with the reference numeral 2, that is provided with a different kind of filling, in order to have a very high contact surface for each column meter. This allows to have a lower equivalent height for stage, thus improving the treatment effectiveness. A first sulphuric acid solution 10 circulates inside the first absorption column 2, said first solution initially being an about 50 % sulphuric acid solution and reacting with the ammonia stream 11 coming from the head of the stripping column 1 in accordance with the reaction:

$$2NH_4OH + H_2SO_4 \rightarrow (NH_4)_2SO_4 + 2H_2O \qquad (I)$$

Since the first absorption column 2 is provided to have a batch functioning, the sulphuric acid concentration will tend to decrease as ammonia is absorbed. Therefore, the first absorption column 2 is provided to be under pH control so that, upon reaching the value of pH = 5.5, the plant performs a series of operations consisting in discharging the ammonium sulphate acid solution from said first absorption column 2 in a tank, displacing the sulphuric acid solution present in the second absorption column 3 into said first absorption column 2, and restoring fresh 50 % sulphuric acid solution in said second absorption column 3.

The second absorption column 3 is provided for the emissions safety lock, so as to avoid that ammonia emission could be released into the atmosphere beyond the law thresholds. Said second absorption column 3 is identical to the previous first absorption column 2 from the constructive point of view, both geometrically and as filling body. These first and second absorption columns 2 and 3 will similarly have the same operative conditions, the only difference consisting in the fact that the ammonium sulphate production is quantitatively low in said second absorption column 3 and, therefore, a pH control is not provided.

The suction fan 4, which is necessary for the functioning of the whole plant, is placed between the stripping column 1 and the first absorption column 2, since the slight depression that results therefrom on said stripping column 1 helps the ammonia extraction. Optionally, the use of a biofilter (not shown) can be provided, said biofilter being located downstream the plant and intended for treating possible stinking aeriform fractions, possibly stripped together with ammonia.

**Plant operative conditions**

Stripping step

In the considered example, the starting slurry 9 has an ammonia concentration comprised between 2,500 and 3,000 p.p.m., and the flow-rate to be treated is of 4 m$^3$/h on average. Therefore, the ammonia amount in the slurry 9 turns out to be comprised between 10 and 12 kg/h, the target of the plant being to reduce this amount by 70 %, that is to remove from 7 to 8,4 kg/h.

In the foreseen conditions, slurry 9 is recirculated into the stripping column 1 with a flow-rate of 5 m$^3$/h so, with an average residence time of about three hours in the stripping stage, the slurry itself undergoes three passages on average in counter-current with the hot air 7, while this latter is always "fresh", that is without ammonia upon entering the column. Slurry is then discharged from an overflow into a collecting station, for being subsequently used according to the agronomic plan. Therefore, in the mass balance, there will be a slurry concentration upon entrance of about 3,000 p.p.m. as ammonia, and a slurry concentration upon exit of about 600 p.p.m..

Air 7 upon entrance has an average temperature of 60 °C, with a flow-rate of 2,000 Nm$^3$/h and a specific humidity of about 8 g/kg of dry air, considering an average wet bulb temperature of 20 °C and an average relative humidity of 60 % as starting data (variable data depending on the meteorological conditions). Upon exit, said air is expected to have a temperature of 45 °C and a water content of 25 g/kg.

Therefore, the stripping column 1 is as follows:

|  | Slurry 9 entrance | Aeriform 11 exit | Discharge |
|---|---|---|---|
|  | Slurry 4,000 kg/h |  | Slurry 3,956.8 kg/h |
|  | $NH_3$ 12 kg/h | $NH_3$ 9.6 kg/h | $NH_3$ 2.4 kg/h |
|  | Air 1,728 kg/h | Air 1,728 kg/h |  |
|  | Water 13.8 kg/h | Water 43.2 kg/h |  |

Other pollutants, mainly consisting of sulphurated products in the form of sulphides and mercaptans, could also be present in the aeriform stream 11 exiting the stripping column 1. These compounds are expected to have very low concentrations, and in part they are also retained in the absorption and reduction columns 2 and 3.

As already previously mentioned, in case of need the installation of a final biofilter for treating the aeriform effluent before discharging it into the atmosphere can be provided.

Absorption Step

During this step, the aeriform effluent 11 coming from the stripping column 1 is put in contact, inside a first absorption column 2, with a first sulphuric acid solution 10, initially having a concentration of 50 % by weight, that provides to absorb ammonia from the aeriform stream 11 itself, with formation of ammonium sulphate. This leads to a progressive decrease of the amount of free sulphuric acid in the solution, which is let to circulate until when its pH will reach a value of 5.5. At this point, the ammonium sulphate acid solution is discharged.

Since the foreseen volume of tank 12, in which the sulphuric acid solution is contained, is of 5 $m^3$, this means that a solution at 50 % by weight contains 2,500 kg of sulphuric acid, this corresponding to 25,5 kmoles of sulphuric acid. Expecting then to convert the 90 % thereof into ammonium sulphate, in the final solution there will be 2,640 kg of ammonium sulphate, equal to 22,95 kmoles.

Considering the fact that the aeriform 11 entering the first absorption column 2 involves an ammonia flow of 9,6 kg/h, equal to 0.505 kmoles/h, and that the conversion yield is estimated at 95 %, a solution replacement every about 48 hours (operatively, every about 2 days) is foreseen.

The mass balance relevant to air and ammonia entering into and exiting from the absorption stage 2, assumed that the water content variation is insignificant, is therefore as follows:

|  | Aeriform 11 entrance | Aeriform 13 exit | Discharge |
|---|---|---|---|
|  | $NH_3$ 9.6 kg/h | $NH_3$ 0.42 kg/h | $(NH_4)_2SO_4$ 2,640 kg/batch |
|  | Air 1,728 kg/h | Air 1,728 kg/h |  |

The neutralisation reaction (I) between ammonia and sulphuric acid is characterised by a quite high exothermy. As a matter of fact, standing the involved quantities, a heat development of 18.2 kW is produced. It is, therefore, necessary to remove this thermal contribution by cooling through the external heat exchanger 5. Otherwise, taking into consideration a specific heat of 4.182 kJ/kg of solution, each hour of work would imply a temperature increase of about 3.3 °C, assuming that the plant is completely adiabatic.

Final reduction step

Since the aeriform solution 13 exiting the first absorption column 2 is still contaminated with ammonia, with a foreseen concentration of about 200 mg/$m^3$, a further reduction step is needed, which is carried out in counter-current to a fresh 50 % sulphuric acid solution 19, inside a second absorption column 3, which is identical to said first absorption column 2 but without the cooling exchanger, since the developed heat is about twenty times lower and the temperature increase is negligible.

Thus, taking into consideration the exit data from the preceding column, assumed that the water content variation is insignificant, a mass balance as follows is foreseen:

|  | Aeriform 13 entrance | Aeriform 14 exit | Discharge |
|---|---|---|---|
|  | $NH_3$ 0.42 kg/h | $NH_3$ 0.019 kg/h | $(NH_4)_2SO_4$ 130 kg/batch |
|  | Air 1,728 kg/h | Air 1,728 kg/h |  |

The 50 % sulphuric acid solution, having ammonium sulphate dissolved therein, discharged from said second absorption column 3 is then returned to said first absorption column 2.

The ammonia maximum concentration is foreseen to be lower than the value of 10 mg/Nm$^3$, upon discharging into the atmosphere. This value has to be considered as the upper threshold, since a reduction by 95 % for each stage represents an extremely precautionary value, which is achievable also with an absorption on water if conveniently cooled. In this case, the absorption on a sulphuric acid solution can be also regarded as quantitative and, therefore, the actual concentration upon discharge can be deemed to be lower than 5 mg/Nm$^3$, and basically as near as its detection limit.

To strengthen what said above, it is worthy to remind that the method accepted for the ammonia analytical quantification in aeriform streams provides an absorption on a 0.1 normal sulphuric acid solution, that is at a concentration noticeably lower than what provided in the plant according to the present invention.

### Equipment list

As better represented in FIG. 1, the plant of the invention comprises the apparatuses listed hereinafter, including the indication of their most significant characteristics:

| ITEM | COMPONENT | MATERIAL | INDICATIVE SIZE | NOTES |
|---|---|---|---|---|
| 1 | Stripping column | Polypropylene / Fibreglass | $\varnothing$: 1,200 mm<br>Filling height: 4 meters | Spheres filling |
| 15 | Stripping column tank | Polypropylene / Fibreglass | Volume: 10 m$^3$ | Diaphragm overflow discharge |
| 8a | Slurry circulation pump | Polypropylene / PVDF Horizontal | Nominal rate: 10 m$^3$/h<br>Head: 15 meters of H$_2$O | IP 55 anti-jam open impeller |
| 8b | Slurry circulation pump | Polypropylene / PVDF Horizontal | Nominal rate: 10 m$^3$/h<br>Head: 15 meters of H$_2$O | IP 55 anti-jam open impeller |
| 4 | Fan | Stainless steel | Nominal rate: 2,500 m$^3$/h<br>Head: 700 millimetres of H$_2$O | IP55 non- sparking execution |
| 2 | First absorption column | Polypropylene | $\varnothing$: 1,200 mm<br>Filling height: 3.5 meters | Raschig rings filling |
| 12 | First absorption column tank | Polypropylene | Volume: 5 m$^3$ | |
| 16a | First absorption solution circulation pump | Polypropylene / PVDF submerged vertical | Nominal rate: 5 m$^3$/h<br>Head: 15 meters of H$_2$O | IP 55 |
| 16b | First absorption solution circulation pump | Polypropylene / PVDF submerged vertical | Nominal rate: 5 m$^3$/h<br>Head: 15 meters of H$_2$O | IP 55 |
| 5 | Heat exchanger | Glass lined or plastic | Power 20 thermal kW | Surface about 10 m$^2$ |
| 3 | Second absorption column | Polypropylene | $\varnothing$: 1,200 mm<br>Filling height: 3.5 meters | Raschig rings filling |
| 17 | Second absorption column tank | Polypropylene | Volume: 5 m$^3$ | |
| 18a | Second absorption solution circulation pump | Polypropylene / PVDF submerged vertical | Nominal rate: 5 m$^3$/h<br>Head: 15 meters of H$_2$O | IP 55 |
| 18b | Second absorption solution circulation pump | Polypropylene / PVDF submerged vertical | Nominal rate: 5 m$^3$/h<br>Head: 15 meters of H$_2$O | IP 55 |

EP 2 239 030 A1

(continued)

| ITEM | COMPONENT | MATERIAL | INDICATIVE SIZE | NOTES |
|---|---|---|---|---|
| P4 | Service pump to $H_2SO_4$ tanks | Polypropylene / PVDF horizontal | Flow-rate: 30 m³/h Head: 30 meters of $H_2O$ | IP 55 magnetic after-effect |
| P6 | Service pump to NaOH tank | Polypropylene / PVDF horizontal | Flow-rate: 15 m³/h Head: 15 meters of $H_2O$ | IP 55 magnetic after-effect |

## Consumptions estimate: reagents, electric power and water

As far as the reagents consumption is concerned, the consumption depends on the ammonia amount present in the starting slurry, on the average flow-rate of the slurry to be treated and on the stripping and absorption percentages. Therefore, starting from the design values, hereinafter summarised:

Entering ammonia concentration: 3,000 p.p.m.
Hourly average flow-rate of the slurry to be treated: 4,000 kg/h
Stripped ammonia percentage: 80 %
Converted ammonia percentage: 99 %

an hourly consumption of 50 % sulphuric acid equal to 50 kg/h is estimated.
The plant estimated installed power consists of the following items:

| ITEM | POWER | CHARGE PERC. | OPERATION |
|---|---|---|---|
| 8a | 1.5 kW | 80 % | Continuous |
| 8b | 1.5 kW | 80 % | Alternative to 8a |
| 16a | 1.1 kW | 80 % | Continuous |
| 16b | 1.1 kW | 80 % | Alternative to 16a |
| 18a | 1.1 kW | 80 % | Continuous |
| 18b | 1.1 kW | 80 % | Alternative to 18a |
| 4 | 7.5 kW | 80 % | Continuous |
| P4 | 4 kW | 80 % | Intermittent (10 %) |
| P6 | 2.2 kW | 80 % | Intermittent (10 %) |
| Aux | 3 kW | 80 % | Discontinuous (50 %) |

Depending on what said above, the hourly average power absorption can be estimated to be of about 11 kW. As far as the water consumption is concerned, it is worthy to notice that water is supposed to be used just as coolant. Therefore, once carried out its duty, it can be assigned for other uses, since it does not enter in contact with any pollutants and it only changes its thermal level.
As already said before, the absorption reaction (I) between ammonia and sulphuric acid inside the first absorption column 2 implies a reaction exothermy, which has to be removed from the system in order to avoid a continuous temperature increase.
The formation enthalpies of the different species are the following:

$$(NH_4)_2SO_4 = 1,181 \text{ kJ/mol}$$
$$H_2SO_4 = 814 \text{ kJ/mol}$$
$$NH_4OH = 46 \text{ kJ/mol}$$
$$H_2O = 286 \text{ kJ/mol}$$

and being the produced ammonium sulphate equal to 0.242 kmols/h, the following balance is obtained:

6

$$\Delta Hr = [0.242 \times 1,181 - (0.483 \times 46 + 0.242 \times 814)] \times 1,000$$

$\Delta Hr$=65,530 kJ/h equal to 18.2 kW of thermal power

Since the specific heat of water is 4.182 kJ/kg, and accepting a $\Delta T$ of 5 °C, a water consumption of 3.2 m$^3$/h ensues.

Taking into account the farm self-consumption needs, a closed-circuit plant can be considered, said plant having an evaporative tower and using the sole cleansing for the firm internal consumption. Other possible cooling methods could be taken into consideration depending on the firm internal availabilities.

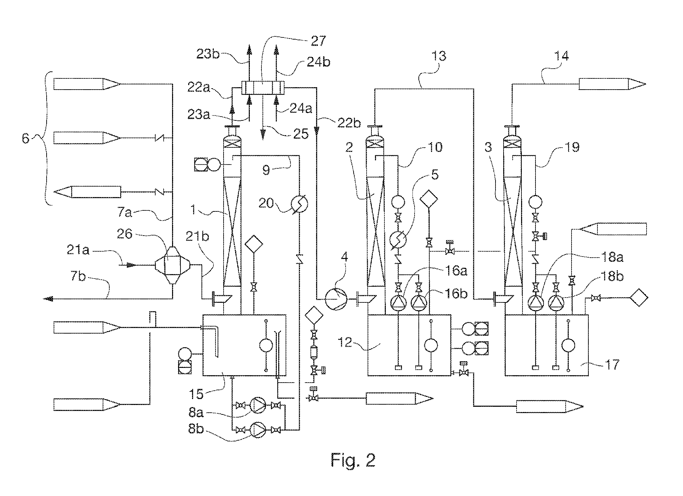

Making now reference to FIG. 2, a variant of the plant for stripping and recovering ammonia from digested wastes according to the present invention is shown.

In particular, according to said variant, the plant further comprises:

- a heat exchanger 20, placed on the slurry recirculation line 9 into the stripping column 1;
- a heat recoverer 26, placed between the endothermic engines 6 and the stripping column 1; and
- a condenser 27, placed on the head exiting line from the stripping column 1, before entering the first absorption column 2.

Said heat recoverer 26 allows to use the hot air stream 7a coming from the endothermic engines 6 for heating the ambient air stream 21 a; the air stream 7b coming from the endothermic engines, cooled, can be released directly to the atmosphere, while the ambient air stream 21b, heated, is sent into the stripping column 1.

The use of said heat recoverer 26 allows to avoid to send into column the air coming from the endothermic engines 6, rich of $CO_2$, with consequent saving of sodium hydroxide NaOH for maintaining the pH value of the solution in the stripping column 1.

Said condenser 27 allows to reduce the water amount present in the stream 22a exiting the stripping column 1, generating a stream 22b entering the first absorption column 2 having a smaller water amount and a condensate stream 25; condensation takes place by means of two streams 23a and 24a, of cold water, at about 20 °C, and of chilled water, at about 10 °C, respectively, entering said condenser 27, streams 23b and 24b forming the corresponding streams exiting said condenser.

The use of said condenser 27 allows to remove a part of water that is present in the stream exiting the stripping column 1 before entering the first absorption column 2, this avoiding to dilute the ammonium sulphate below 30 %, said dilution depending on the water amount both upon entrance into and upon exit from the second absorption column 3.

The employ of known apparatuses commonly used in the technical field, as an alternative and/or in addition to those provided by the embodiments herein shown, suitable for optimising the functioning of the plant according to the invention in terms of, for instance, energy saving and/or chemicals saving, is part of the scope of the present invention.

**Claims**

1. A process for reducing ammonia from digested wastes (9), **characterised in that** it provides to strip ammonia by counter-current air/liquid extraction inside a stripping column (1).

2. A process according to claim 1, **characterised in that** it provides to subsequently recover ammonia by counter-current contact of the gas phase (11) exiting said stripping column (1) with a first sulphuric acid solution (10) inside a first absorption column (2).

3. A process according to claim 2, **characterised in that** it provides to reduce ammonia from said wastes (9) by 70-80 %.

4. A process according to claim 1, **characterised in that** it provides to put said wastes (9) in contact with a hot air stream (7) inside said stripping column (1).

5. A process according to claim 4, **characterised in that** said hot air stream (7) has an average temperature of 60 °C and it comes from the cooling of the endothermic engines (6) producing electric power for the anaerobic treatment plant of said wastes (9).

6. A process according to claim 1, **characterised in that** said stripping column (1) is of the spherical filling type, suitable for providing an air/liquid contact time of about three hours.

**7.** A process according to claim 1, **characterised in that** it provides to basify said wastes (9) inside said stripping column (1).

**8.** A process according to claim 2, **characterised in that** a first solution (10) circulates inside said first absorption column (2), said first solution (10) initially being an about 50 % sulphuric acid solution reacting with ammonia in accordance with the reaction:

$$2NH_4OH+H_2SO_4 ---> (NH_4)_2SO_4+2H_2O \qquad (I)$$

**9.** A process according to claim 2, **characterised in that** it further provides a second absorption column (3) for recovering ammonia from the gas stream (13) exiting said first absorption column (2).

**10.** A process according to claim 9, **characterised in that** said first absorption column (2) has a batch functioning, the ammonium sulphate acid solution exiting said first absorption column (2) being discharged in a tank, the sulphuric acid solution present in said second absorption column (3) being displaced into said first absorption column (2), and the fresh sulphuric acid solution being restored in said second absorption column (3).

**11.** A process according to claim 2, **characterised in that** it provides a suction fan (4) for the aeriform release (11) from said stripping column (1), so as to create a slight depression inside said stripping column (1).

**12.** A plant for carrying out the process according to one or more of the preceding claims, **characterised in that** it provides a stripping column (1) to counter-current air/liquid extract ammonia from said wastes (9).

**13.** A plant according to claim 12, **characterised in that** it further provides a first absorption column (2) for the ammonia from the gas stream (11) exiting said stripping column (1), in counter-current to a first sulphuric acid solution (10).

**14.** A plant according to claim 13, **characterised in that** it further provides a second absorption column (3) for the ammonia from the gas stream (13) exiting said first absorption column (2), in counter-current to a second sulphuric acid solution (19).

**15.** A plant according to claim 14, **characterised in that** it further provides a heat exchanger (20), placed on the slurry recirculation line (9) into the stripping column (1), a heat recoverer (26), placed between the endothermic engines (6) and the stripping column (1), and a condenser (27), placed on the head exiting line from the stripping column (1).

Fig. 1

Fig. 2

**Europäisches Patentamt**
**European Patent Office**
**Office européen des brevets**

# EUROPEAN SEARCH REPORT

**Application Number**

EP 09 15 7621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 318 105 A (MACKOWIAK JERZY DR-ING HABIL [DE]) 11 June 2003 (2003-06-11)<br><br>* paragraphs [0006], [0013], [0026]; claims 1,2,8; figure 1 *<br>* abstract * | 1,2,7,8, 10,12, 13,15 | INV.<br>B01D19/00<br>B01D53/14<br>B01D53/58<br>C02F1/20 |
| X | US 6 464 875 B1 (WOODRUFF STEVEN R [US]) 15 October 2002 (2002-10-15)<br>* column 6, line 20 - line 46; figure 1 *<br>* column 6, line 56 - column 7, line 35 *<br>* column 12, line 48 - line 60 *<br>* column 17, line 64 - line 65 *<br>* column 18, line 18 - line 28 *<br>* column 18, line 60 - line 61 *<br>* abstract; claims 1,6 * | 1,6, 9-11,14 | |
| X | US 3 920 419 A (SCHROEDER JAMES W ET AL) 18 November 1975 (1975-11-18)<br>* abstract; claim 7; figure 1 *<br>* column 4, line 59 - line 68 *<br>* column 5, line 28 - line 39 * | 1,3-5,12 | |
| X | EP 0 029 536 A (STERLING DRUG INC [US]) 3 June 1981 (1981-06-03)<br>* abstract; claims 1,5; figure 1 *<br>* page 4, line 5 - page 7, line 6 * | 1-15 | TECHNICAL FIELDS SEARCHED (IPC)<br><br>B01D<br>C02F |
| X | US 4 668 250 A (DRESE JAN T [NL]) 26 May 1987 (1987-05-26)<br>* abstract; claim 1; figures 1,2 * | 1-15 | |
| X | NL 8 501 374 A (DRESE JAN THEO) 2 September 1985 (1985-09-02)<br>* page 1, line 8 - line 24; claim 1; figure 1 * | 1-15 | |

-/--

The present search report has been drawn up for all claims

| Place of search | Date of completion of the search | Examiner |
|---|---|---|
| The Hague | 3 September 2009 | Weber, Christian |

EPO FORM 1503 03.82 (P04C01)

| | Europäisches Patentamt<br>European Patent Office<br>Office européen des brevets | **EUROPEAN SEARCH REPORT** | Application Number<br>EP 09 15 7621 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | US 2006/006055 A1 (BONDE TORBEN A [DK])<br>12 January 2006 (2006-01-12)<br>* abstract; figure 3 *<br>----- | 1-15 | |
| | | | **TECHNICAL FIELDS<br>SEARCHED (IPC)** |

The present search report has been drawn up for all claims

| Place of search | Date of completion of the search | Examiner |
|---|---|---|
| The Hague | 3 September 2009 | Weber, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................................

& : member of the same patent family, corresponding document

EPO FORM 1503 03.82 (P04C01)

EP 2 239 030 A1

## ANNEX TO THE EUROPEAN SEARCH REPORT
## ON EUROPEAN PATENT APPLICATION NO.

EP 09 15 7621

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2009

| Patent document cited in search report | | Publication date | Patent family member(s) | | Publication date |
|---|---|---|---|---|---|
| EP 1318105 | A | 11-06-2003 | AT 417024 T <br> DE 10159734 A1 | | 15-12-2008 <br> 18-06-2003 |
| US 6464875 | B1 | 15-10-2002 | NONE | | |
| US 3920419 | A | 18-11-1975 | NONE | | |
| EP 0029536 | A | 03-06-1981 | NONE | | |
| US 4668250 | A | 26-05-1987 | DE 3484871 D1 <br> EP 0160043 A1 <br> WO 8501671 A1 | | 05-09-1991 <br> 06-11-1985 <br> 25-04-1985 |
| NL 8501374 | A | 02-09-1985 | NONE | | |
| US 2006006055 | A1 | 12-01-2006 | AT 426446 T <br> AU 2003281808 A1 <br> CA 2533546 A1 <br> WO 2004012840 A2 <br> DK 1528953 T3 <br> EP 1528953 A2 | | 15-04-2009 <br> 23-02-2004 <br> 12-02-2004 <br> 12-02-2004 <br> 20-07-2009 <br> 11-05-2005 |

EPO FORM P0459

For more details about this annex : see Official Journal of the European Patent Office, No. 12/82

13